# EUROPEAN PATENT SPECIFICATION

(11) **EP 1 778 453 B1**
(45) Veröffentlichungstag und Bekanntmachung des Hinweises auf die Patenterteilung: **26.01.2011**
(21) Anmeldenummer: 05770484.3
(22) Anmeldetag: 10.08.2005
(51) Int. Cl.: B29C 47/12, B29C 49/00

(54) **VORRICHTUNG ZUR HERSTELLUNG VON WELLROHREN**
DEVICE FOR PRODUCING CORRUGATED PIPES
DISPOSITIF POUR REALISER DES TUBES ONDULES

(30) Priorität: 18.08.2004 DE 102004040019
(43) Veröffentlichungstag der Anmeldung: 02.05.2007
(73) Patentinhaber: Drossbach GmbH & Co. KG, 86641 Rain am Lech (DE)
(72) Erfinder: HETZNER, Claus, 90513 Zirndorf (DE); HURLER, Michael, 86703 Rögling (DE)
(74) Vertreter: Altenburg, Udo
(86) Internationale Anmeldenummer: PCT/EP2005/008687
(87) Internationale Veröffentlichungsnummer: WO 2006/018207

(56) Entgegenhaltungen:
- EP-A- 0 636 462
- EP-A- 1 407 873
- US-A- 4 787 598
- PATENT ABSTRACTS OF JAPAN Bd. 014, Nr. 373 (M-1009), 13. August 1990 (1990-08-13) & JP 02 134227 A (MIRAI IND CO LTD), 23. Mai 1990 (1990-05-23)

## Beschreibung

Die vorliegende Erfindung betrifft eine Vorrichtung zur Herstellung von Wellrohren aus thermoplastischem Kunststoff, bei der in einem Kreislauf sich paarweise ergänzende Formbacken gemeinsam entlang einer sich an einen Spritzkopf anschließenden Formstrecke geführt, am Ende der Formstrecke auseinandergefahren und separat voneinander zu deren Anfang zurückgeführt werden, mit einer Formstreckeneinrichtung zur Bewegung der Formbacken entlang der Formstrecke, die einen Maschinentisch mit Antriebsmitteln für die Formbacken auf der Formstrecke aufweist, und mit einer Rückfördereinrichtung zur Rückförderung der Formbacken vom Ende der Formstrecke zu deren Anfang, die eine Auslaufbaugruppe zum Auseinanderfahren der Formbacken am Ende der Formstrecke und/oder eine Einlaufbaugruppe zum Hineinfahren der Formbacken am Anfang der Formstrecke aufweist.

Bei solchen Wellrohranlagen vom sogenannten Shuttle-Typ werden hin- und hergehende Rückförderer verwendet. Die Rückförderer können einen Greifarm besitzen, der eine am Ende der Formstrecke befindliche Formbacke greift, zum Anfang der Formstrecke fährt, die Formbacke dort absetzt und an die vorauseilende Formbacke aufschließt bzw. ansetzt sowie anschließend wieder an das Ende der Formstrecke fährt, um dort die nächste Formbacke zu greifen. Auf der Formstrecke selbst werden die Formbacken von separaten Antrieben, die zum einen auf dem Maschinentisch liegen und zum anderen am darüberliegenden Deckrahmen angeordnet sind, fortbewegt. Insbesondere ist es hierbei bekannt, im Maschinentisch und im darüberliegenden Deckrahmen Antriebsritzel vorzusehen, die in an den Formbacken oben und unten angeordnete Zahnstangen eingreifen und diese entsprechend vorwärts bewegen.

US 4 787 598 A betrifft eine Vorrichtung zum fortlaufenden Erzeugen von Rohren mit querprofilierter Wandung aus einem in noch plastischem Zustand aus einer Extrusionsdüse austretenden Rohrstrang aus thermoplastischem Kunststoff.

EP-A-1 407 873 betrifft eine Vorrichtung zur Herstellung von Wellrohren aus thermoplastischem Kunststoff, bei der in einem Kreislauf sich paarweise ergänzende Formbacken gemeinsam entlang einer sich an einen Spritzkopf anschließenden Formstrecke geführt werden.

JP 02 134227 A betrifft eine Vorrichtung zur Herstellung von Wellrohren mit einem Mechanismus zum Aufschließen der Formbacke und einem horizontal wirkenden Antrieb mit einem Anschubelement.

Die EP-A-0 764 516 offenbart eine Vorrichtung zur Herstellung von Rohren aus thermoplastischem Kunststoff mit Querprotilierung, die auf einer Formstrecke paarweise in Kreislauf geführte Formbacken aufweist. Es ist eine Transportvor-richtung zur Rückführung der Formbacken vorgesehen, die nach Art eines Brückenkranes ausgebildet ist. Auf einer die Formstrecke übergreifenden Transport-Brücke sind zwei quer zur Produktionsrichtung und gegensinnig zueinander verfahrbare Transport-Wagen vorgesehen, an denen jeweils ein nach unten gerichteter Transportarm mit einer Haltevorrichtung für je eine Formbacke angebracht ist.

Aus der WO-A-94 07673 ist weiter eine Wellrohranlage bekannt, bei der die Formbackenpaare in zwei Gruppen zusammengefaßt sind. Eine erste Gruppe ist auf einem Schlitten gelagert, der an einem unteren Tragrahmen hin- und herfahrbar ist. Eine zweite Gruppe von Formbacken ist an einem Schlitten gelagert, der an einem oberen Tragrahmen eines Brückenkranes hin- und herfahrbar ist. Die Formbacken sind dabei jeweils auf Laufkatzen auseinander- und zusammenfahrbar. Um die Formbacken zurückzufahren, werden sie zunächst auf den Laufkatzen auseinandergefahren, sodann wird der Schlitten mit den auseinandergefahrenen Formbacken an den Formbacken des anderen Schlittens vorbei zurück zum Anfang der Formstrecke gefahren und schließlich werden die Formbacken auf dem Schlitten wieder zusammengefahren.

Die DE-A-43 18 514 offenbart eine Vorrichtung zum Herstellen von Wellrohren aus thermoplastischem Kunststoff, die eine im Anschluss an einen Spritzkopf eines Extruders angeordnete Formstrecke aufweist, die aus einer in einem Gestell angeordneten Führung besteht, auf der in einem Einlauf paarweise zu ringförmigen Formen geschlossene Formbacken dicht aufeinanderfolgend verschoben werden, die auf ihrer Unterseite mit Zahnstangen versehen sind. In einem Auslauf werden die Formbacken voneinander getrennt und von mit Kupplungseinrichtungen versehenen Greifarmen erfaßt und von diesen wieder in den Einlauf der Formstrecke eingefügt. Die Greifarme sind durch Antriebe beweglich auf Schlitten gelagert, die auf Führungen von und zu der Formstrecke parallelen Rücklaufstrecken durch Antriebe hin- und herfahrbar sind. Um die Greifarme bei einfachem und stabilem Aufbau in einfacher Weise steuern zu können, sind diese in Führungen des Schlittens ausschließlich quer zu dessen Bewegungsbahn verfahrbar.

Die DE-A-43 38 990 offenbart eine Vorrichtung zum Herstellen von Wellrohren aus thermoplastischem Kunststoff, die eine im Anschluss an einen Spritzkopf eines Extruders angeordnete Formstrecke aufweist, die aus einer in einem Gestell angeordneten Führung besteht, auf der in einem Einlauf paarweise zu ringförmigen Formen geschlossene Formbacken dicht aufeinanderfolgend verschoben werden, die auf ihrer Unterseite mit Zahnstangen versehen sind. Im Anfangsbereich der Formstrecke sind Antriebsmittel angeordnet, die mit den Zahnstangen der zusammengeschobenen Formbacken kämmen. In einem der Formstrecke folgenden Auslauf werden die Formbacken voneinander getrennt und dann über Fördermittel zum Einlauf der Formstrecke zurückgeführt.

Die EP-A-0 007 556 offenbart eine Vorrichtung zur Herstellung von Rohren aus thermoplastischem Kunststoff mit Querprofilierung, die auf einer Formstrecke paarweise in Kreislauf geführte Formbacken aufweist. Um jeweils nur eine möglichst geringe Gesamtzahl von im Kreislauf geführten Formbacken zu benötigen, ist ein Schlitten mit einem Schwenkarm vorgesehen, an dessen freiem Ende ein Koppelorgan zur lösbaren Ankoppelung an einer Formbacke angeordnet ist.

Die EP-A-1 243 400 offenbart eine Vorrichtung zur Herstellung von Rohren aus thermoplastischem Kunststoff mit Querprofilierung, die auf einer Formstrecke paarweise in Kreislauf geführte Formbacken aufweist. Die Rückfödereinrichtung besteht aus einem Portalroboter, der die Formbacken aus der Formstrecke herausführt, an das stromaufwärtige Ende der Formstrecke zurückführt und in die Formstrecke wieder hineinführt. Das Ansetzen an die jeweils vorauseilende Formbacke wird jedoch durch getrennt von dem Portalroboter arbeitende Pneumatikzylinder als Bestandteil der Rückfördereinrichtung bewirkt.

Die EP-B-0 636 462 offenbart eine Vorrichtung zur Herstellung von Rohren aus thermoplastischem Kunststoff mit Querprofilierung, die auf einer Formstrecke paarweise in Kreislauf geführte Formbacken aufweist. Die Rückfördereinrichtung wird durch eine Rücklaufstrecke gebildet, in der eine Vielzahl von Antriebsritzeln vorgesehen sind, die von unten in die Formbacken eingreifen. Für das Herausführen aus der Formstrecke am stromabwärtigen Ende und für das Hineinführen in die Formstrecke am stromaufwärtigen Ende sind eine Auslauf- bzw. eine Einlaufbaugruppe als Bestandteil der Rücklaufstrecke vorgesehen, wobei die Querförderung der Formbacken jeweils durch querbeweglich angetriebene Ritzel erfolgt. Diese Querförderritzel treiben die zu fördernde Formbacke einerseits in Produktionrichtung an. Andererseits sind die Querförderritzel auf Vielkeilwellen axialverschieblich gelagert, so dass die Querförderritzel auch in deren axialer Richtung angetrieben werden können, um die zu fördernde Formbacke aus der Formstrecke heraus bzw. in die Formstrecke hineinzufahren.

Der vorliegenden Erfindung liegt die Aufgabe zugrunde, eine verbesserte Wellrohranlage zu schaffen, bei welcher die Rückführung der Formbacken vom stromabwärtigen Ende zum stromaufwärtigen Ende optimiert ist. Insbesondere soll die Rückfördereinrichtung derart ausgestaltet werden, dass die Rückführung der Formbacken in zeitlicher und dynamischer Hinsicht verbessert ist. Im Endergebnis soll es auch möglich sein, die Produktionsgeschwindigkeit bei der Herstellung von Wellrohren zu erhöhen.

Diese Aufgabe wird durch eine Vorrichtung zur Herstellung von Wellrohren gemäß Anspruch 1 gelöst. Die abhängigen Ansprüche betreffen vorteilhafte Ausgestaltungen der Erfindung.

Erfindungsgemäß weist die Auslaufbaugruppe und/oder die Einlaufbaugruppe Antriebsmittel auf, die senkrecht in Bezug auf die Ebene des Maschinentisches verfahrbar sind. Die Verfahrbarkeit in senkrechter Richtung ist dabei nicht in streng geometrischer Hinsicht zu verstehen, es kann auch eine Bewegungskomponente in einer Richtung parallel zur Ebene des Maschinentisches vorhanden sein, insbesondere wie im Falle einer Schwenkbewegung. Mit dem Begriff Formbacke wird im Folgenden insbesondere eine Formhälfte verstanden, die zusammen mit einer zusammenwirkenden Formhälfte einen geschlossenen Formbereich zum Herstellen eines Wellrohres bildet.

Die Einlaufgruppe dient zum Hineinführen der Formbacken in die Formstrecke und gegebenenfalls auch zum Ansetzen der Formbacken an die jeweils in Produktionsrichtung vorauslaufende Formbacke. Das Ansetzen kann jedoch auch durch einen separaten Antrieb, insbesondere durch Pneumatikzylinder erfolgen. Die Formbacken auf der Formstrecke werden durch Antriebsmittel im Anfangsbereich der Formstrecke in Produktionsrichtung angetrieben, so dass die jeweils stromaufwärtigsten Formbacken durch diese Antriebsmittel angetrieben werden, und dadurch alle vorauslaufenden Formbacken durch Druckbeaufschlagung in Produktionsrichtung vorangetrieben werden. Üblicherweise werden hierfür ein oder mehrere Antriebsritzel verwendet, die durch eine Ausnehmung im Maschinentisch von unten in Zahnstangen der Formbacken eingreifen. Außerdem können obere Antriebsritzel vorgesehen sein, um einen möglichst gleichmäßigen Antrieb zu erreichen.

Wenn eine Einlaufbaugruppe eine Formbacke in die Formstrecke hineingeführt hat, dann können die Antriebsmittel, die z.B. Querförderritzel umfassen, nach dem Stand der Technik erst dann wieder quer nach Außen gefahren werden, um die nächste Formbacke aufzunehmen, wenn das Ansetzen mit einem Ineingriffkommen der Antriebsmittel der Formstreckeneinrichtung erfolgt ist, und außerdem die Formbacke durch diese Antriebsmittel derart weitergefördert wurde, dass diese nicht mehr in Eingriff mit dem Antriebsmittel der Einlaufbaugruppe steht. Das bedeutet, dass die betreffende Formbacken den Eingriffsbereich der Antriebsmittel der Einlaufbaugruppe vollständig verlassen haben muss bevor diese Antriebsmittel wieder quer nach Außen verfahren werden können.

Erfindungsgemäß wird eine effizientere Arbeitsweise der Einlaufbaugruppe erreicht, indem die Antriebsmittel der Einlaufbaugruppe senkrecht in Bezug auf die Ebene des Maschinentisches verfahren werden können. Wenn die betreffende Formbacke in Eingriff mit dem Antriebsmittel der Formstreckeneinrichtung gebracht wurde, können die Antriebsmittel der Einlaufbaugruppe sofort abgesenkt werden, um außer Eingriff mit der Formbacke zu kommen. Auf diese Weise können die Antriebsmittel der Einlaufbaugruppe quer nach Außen verfahren werden, obwohl die Formbacke sich wenigstens teilweise noch oberhalb der Antriebsmittel der Einlaufbaugruppe befindet.

Die Produktionsgeschwindigkeit der Formbacken in der Formstrecke ist im Vergleich zur Rückführungsgeschwindigkeit relativ langsam. Damit wird deutlich, dass der Zeitgewinn mit der erfindungsgemäßen Maßnahme in Bezug auf die Zeitspanne für die gesamte Rückführung nach dem Stand der Technik erheblich ist, da das Außereingriffkommen der Antriebsmittel der Einlaufbaugruppe gegenüber der angesetzten Formbacke, die mit der deutlich langsameren Produktionsgeschwindigkeit vorangetrieben wird, nicht mehr abgewartet werden muss. Im Ergebnis ist es so auch möglich, die Produktionsgeschwindigkeit zu erhöhen, da die Formbacken schneller und effizienter zurückgeführt werden können.

Außerdem können sich durch die erfinderische Maßnahme mehr als eine Formbacke pro Seite auf der Rücklaufstrecke befinden. So können die Antriebsmittel der Einlaufbaugruppe nicht nur schneller nach Außen verfahren werden. Es ist durch die erfinderische Maßnahme zusätzlich möglich, dass eine nächste Formbacke, die noch nicht in die Formstrecke hineingeführt wurde, sich am (äußeren) stromaufwärtigen Ende befindet, ohne dass diese von den Antriebsmitteln der Einlaufbaugruppe ergriffen wurde. Die Antriebsmittel der Einlaufbaugruppe können nämlich von unten mit der Formbacke in Eingriff gebracht werden, und müssen nicht bereits in ihrer äußeren Position befinden, um die nächste Formbacke entgegen zu nehmen, wenn diese von der Rückfördereinrichtung noch entgegen der Produktionsrichtung bewegt wird.

Erfindungsgemäß ist es alternativ oder kumulativ auch möglich, die Verfahrbarkeit der Antriebsmittel senkrecht in Bezug auf die Ebene des Maschinentisches bei der Auslaufbaugruppe vorzusehen. Die oben erwähnten Vorteile werden dabei ebenfalls entsprechend erzielt. Die Antriebsmittel der Auslaufgruppe müssen nicht bereits nach Innen zur Formstrecke hin verfahren sein, um eine Formbacke am Ende der Formstrecke entgegenzunehmen. Vielmehr kann eine Formbacke sich bereits am Ende der Formstrecke befinden, wo es gegebenenfalls durch eine V-förmige Führung von dem Wellrohr entformt wird, wobei die Antriebsmittel der Auslaufbaugruppe dann von unterhalb der Formbacke nach oben verfahren werden, um in Eingriff mit der jeweiligen Formbacke zu kommen.

Nach Auseinanderfahren der Antriebsmittel der Auslaufbaugruppe ergibt sich ebenfalls ein Zeitgewinn, da die Antriebsmittel nach unten und sodann wieder nach Innen verfahren werden können, sobald das erste Antriebsritzel der seitlichen Rücklaufstrecke die Formbacke ergriffen hat, für den Fall, dass eine Ritzelrückführung in der Rücklaufstrecke entgegen der Produktionsrichtung vorgesehen ist. Im Falle einer Rückführung durch einen Portalroboter bzw. Kran entgegen der Produktionsrichtung können die Antriebsritzel der Auslaufbaugruppe abgesenkt und sodann wieder nach Innen zur Formstrecke hin verfahren werden, um die nächste Formbacke zu ergreifen, bevor der Portalroboter bzw. der Kran die nach Außen verfahrene Formbacke ergriffen und weitergefördert hat.

Die Ausführungsbeispiele der Erfindung werden nachstehend anhand der folgenden Zeichnungen näher erläutert.
- Fig. 1: zeigt eine schematische Draufsicht einer Vorrichtung nach einem ersten Ausführungsbeispiel der vorliegenden Erfindung,
- Fig. 2: zeigt eine weitere, detailiertere Draufsicht der Vorrichtung nach dem ersten Ausführungsbeispiel der vorliegenden Erfindung,
- Fig. 3: zeigt eine schematische Draufsicht der Vorrichtung nach dem ersten Aus- führungsbeispiel der vorliegenden Erfindung mit Längsportal,
- Fig. 4: zeigt eine Vorderansicht der Vorrichtung nach dem ersten Ausführungs- beispiel der vorliegenden Erfindung,
- Fig. 5: zeigt eine Vorderansicht der Vorrichtung nach einem zweiten Ausfüh- rungsbeispiel der vorliegenden Erfindung, bei dem das Längsportal auf dem Hallenboden montiert ist,
- Fig. 6: zeigt eine Kippmechanik nach einem Ausführungsbeispiel der vorliegen- den Erfindung zum Absenken der Antriebsmittel der Einlauf bzw. Aus- laufgruppe in seiner oberen Stellung,
- Fig. 7: zeigt eine Kippmechanik nach einem Ausführunsbeispiel der vorliegen- den Erfindung zum Absenken der Antriebsmittel der Einlauf- bzw. Aus- laufgruppe in seiner unteren Stellung,
- Fig. 8: zeigt zwei zusammengesetzte Formbacken mit großem Innendurchmes- ser;
- Fig. 9: zeigt ein Ablaufschema für den Betrieb einer Vorrichtung nach einem Ausführungsbeispiel der vorliegenden Erfindung, wobei sich acht Form- backen auf jeder Seite im Umlauf befinden,
- Fig.10: zeigt ein weiteres Ablaufschema für den Betrieb einer Vorrichtung nach einem Ausführungsbeipiel der vorliegenden Erfindung, wobei sich neun Formbacken auf jeder Seite im Umlauf befinden.

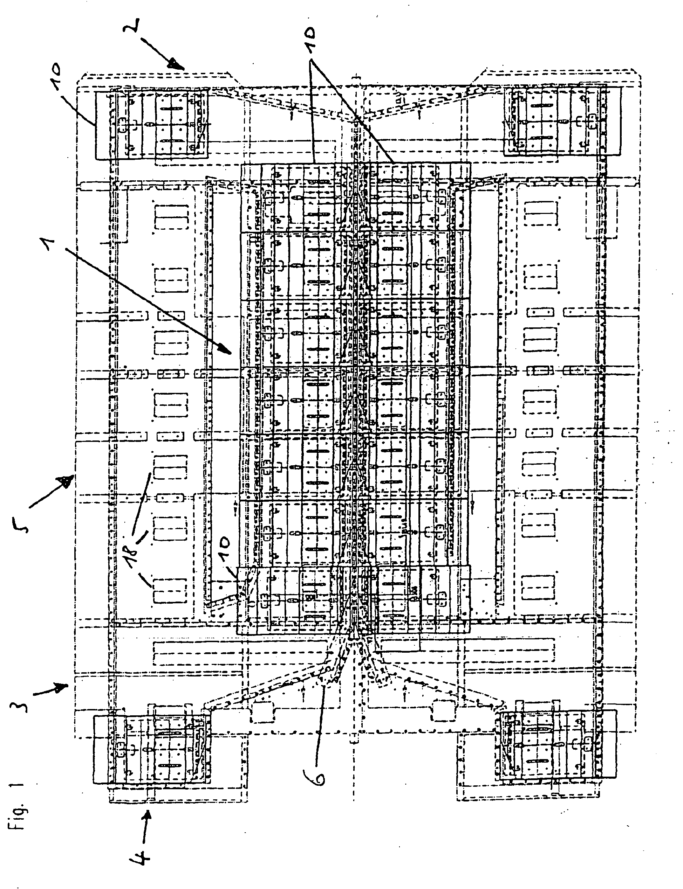

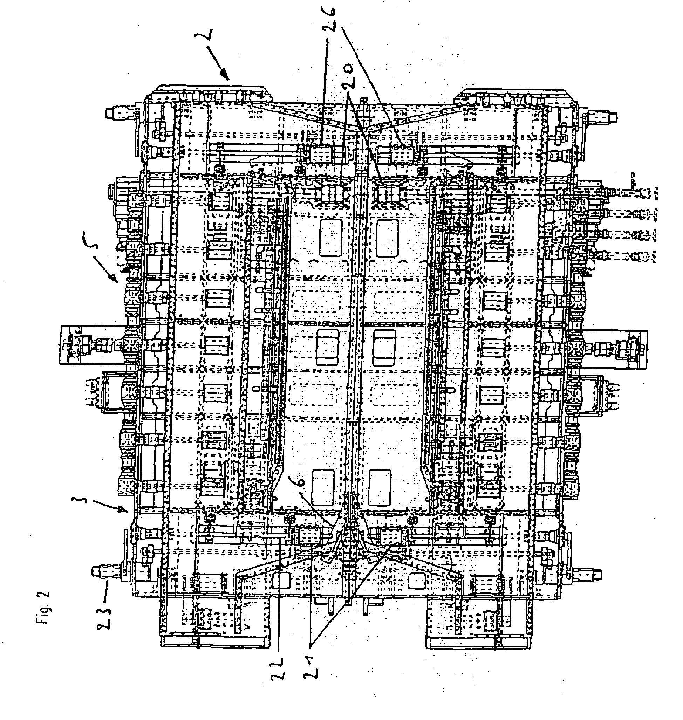

Fig. 1 und 2 zeigen eine schematische und eine detailiertere Draufsicht einer Vorrichtung nach einem ersten Ausführungsbeispiel der vorliegenden Erfindung. Auf einer Formstrecke 1 werden auf zwei Seiten eine Vielzahl von Formbacken 10 in Produktionsrichtung zur Herstellung eines Wellrohres verfahren (in Fig. 1 und 2 von rechts nach links), die sich jeweils paarweise zu einer geschlossenen Form ergänzen. Der Spritzkopf zum Einspritzen von thermoplastischem Kunststoff am Anfang der Formstrecke ist in den Fig. 1 und 2 nicht dargestellt. Am Anfang der Formstrecke 1 befinden sich zwei Antriebsritzel 20 (vgl. Fig. 2), welche sämtliche Formbacken 10 auf einem Maschinentisch 19 (vgl. Fig_{.} 4) der Formstrecke 1 antreiben. Am Ende der Formstrecke 1 befindet sich eine V-förmige Prismenführung 6, welche die letzten Formbacken 10 auf der Formstrecke 1 von dem (nicht dargestellten) Wellrohr entformt, d.h. seitlich auseinanderfährt. Am Ende der Formstrecke ist eine Auslaufbaugruppe 3 angeordnet, welche die Formbacken 10 weiter seitlich aus der Formstrecke herausführt, und dabei gleichzeitig in Produktionsrichtung bewegt, um ein Verkanten mit der nachlaufenden Formbacke zu vermeiden.

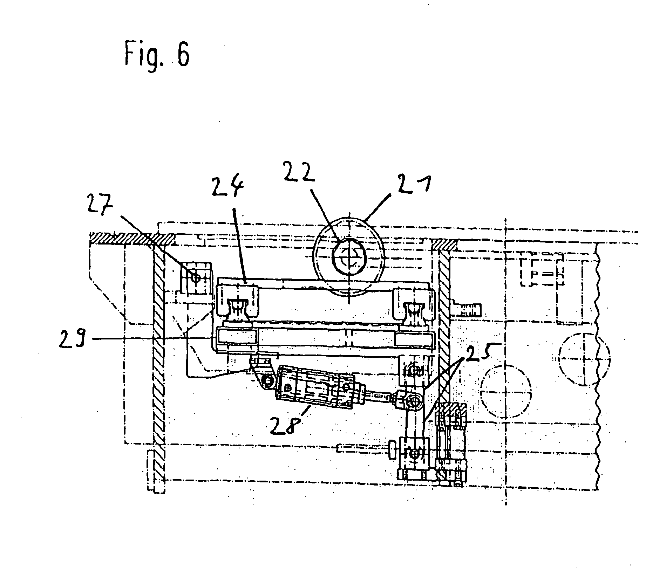

Die Auslaufbaugruppe 3 weist nach dem Ausführungsbeispiel auf beiden Seiten jeweils ein Ritzel 21 auf, das jeweils auf einer Vielkeilwelle 22 zur Übertragung der Drehbewegung eines Motors 23 gelagert ist (vgl. Fig. 2), um eine zu fördernde Formbacke 10 während der Querverschiebung weiter in Produktionsrichtung zu bewegen. Das Ritzel 21 ist zusätzlich in einem Schlitten 24 gelagert (vgl. Fig. 6), der gemeinsam mit dem Ritzel 21 über eine angetriebene Spindel quer zur Produktionsrichtung verfahrbar ist. Durch die Auslaufbaugruppe 3 kann auf diese Weise eine überlagerte Bewegung der zu fördernden Formbacke 10 erzeugt werden, so dass die Formbacke 10 schräg aus der Formstrecke 1 herausgefahren werden kann.

Nach dem Herausfahren einer Formbacke 10 wird das Ritzel 21 in entgegengesetzter Richtung angetrieben, um die Formbacke 10 an eine Rücklaufstrecke 5 übergeben wird, die ihrerseits angetriebene Antriebsritzel 18 aufweist zur Rückförderung der Formbacken 10 entgegen der Produktionsrichtung.

Nach der Rücklaufstrecke 5 wird die rückzufördemde Formbacke 10 an eine Einlaufbaugruppe 2 übergeben, welche ebenfalls querverschiebliche Ritzel 26 - entsprechend der Konstruktion der Auslaufbaugruppe 3 - aufweist. Die querverschieblichen Ritzel 26 nehmen die Formbacken 10 von der Rücklaufstrecke 5 auf, und fahren die Formbacken 10 durch Drehen und gleichzeitiges Querverschieben in die Formstrecke 1 leicht schräg in Produktionsrichtung hinein. Nach dem Hineinfahren in die Formstrecke treiben die Ritzel 26 die hineingefahrenen Formbacken 10 weiter in Produktionsrichtung an, um diese mit den vorlaufenden Formbacken in Kontakt und mit den Antriebsritzeln 20 der Formstreckeneinrichtung in Eingriff gebracht werden. Das Ansetzen kann jedoch auch durch separate Antriebsmittel erfolgen, insbesondere durch Pneumatikzylinder.

In Fig. 1 sind außerdem Parkstationen 4 zur Zwischenlagerung von Formbacken, insbesondere von Sonderformbacken zur Ausbildung einer Muffe zu sehen. Sofern eine Muffe an dem Wellrohr ausgebildet werden soll, werden die Sonderformbacken in den Formstreckenkreislauf eingeschleust, wobei ein anderes Formbackenpaar während eines Umlaufes der Sonderformbacken in den Parkstationen 4 zwischengelagert werden. Danach wird dieses Formbackenpaar wieder in den Kreislauf eingeschleust, und die Sonderformbacken werden wieder in die Parkstationen 4 zurückgefahren.

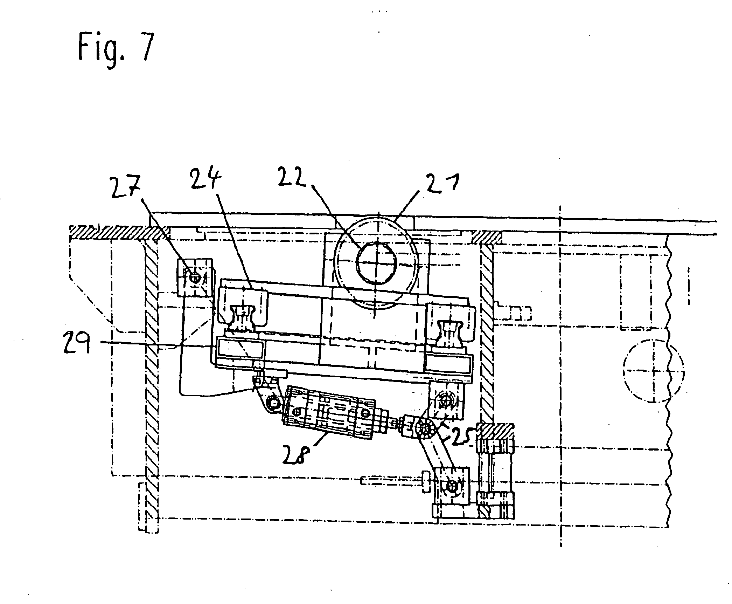

Nach dem ersten Ausführungsbeispiel sind erfindungsgemäß die Querförderritzel 21 und 26 der Auslauf- bzw. Einlaufbaugruppe 3, 2 senkrecht in Bezug auf die Ebene des Maschinentisches 19 verfahrbar. Hierzu ist ein Schwenkmechanismus vorgesehen, der in den Fig. 6 und 7 dargestellt ist. Das Ritzel 21 ist auf der Vielkeilwelle 22 gelagert, um die Übertragung des Drehantriebes zu ermöglichen, sowie auf dem Schlitten 24, um die Querverschiebung zu ermöglichen. Der Schlitten 24 wird durch eine Halterung bzw. einen Rahmen 29 gestützt, die bzw. der einen Kniehebelmechanismus 25 aufweist. Im Bereich des Knies des Kniehebelmechanismus 25 greift ein Pneumatikzylinder 28 an, um den Kniehebelmechanismus 25 zu betätigen.

In Fig. 6 ist das Ritzel 21 in seiner oberen Position dargestellt, wobei der Kniehebelmechanismus 25 gestreckt ist. In Fig. 7 ist das Ritzel 21 in seiner unteren Position dargestellt, wobei der Kniehebelmechanismus 25 gebeugt ist. Durch diese vertikale Verstellmöglichkeit senkrecht zur Ebene des Maschinentisches 19 kann das Ritzel 21 in seiner abgesenkten Stellung quer verschoben werden, auch wenn sich eine Formbacke 10 oberhalb des Ritzels 21 befindet. Das Ritzel 21 muss sich daher nicht bereits nach Innen zur Formstrecke 1 befinden, um eine Formbacke 10 von der Formstrecke 1 entgegenzunehmen. Vielmehr kann diese Formbacke 10 bereits von der V-förmigen Prismenführung 6 von dem Wellrohr entformt werden, wobei erst anschließend das Ritzel 21 von unten durch Betätigung des Kniehebelmechanismus 25 in eine Zahnstange der Formbacke 10 eingreifen kann, die auf der Unterseite der Formbacke angeomdet ist. Dadurch wird ein erheblicher Zeitgewinn erreicht, und das Ritzel 21 kann in dem Zeitraum vor dem Eingriff in die Formbacke 10 noch für die Weiterförderung der vorlaufenden Formbacke 10 verwendet werden.

Derselbe Vorteil ergibt sich bei der Übergabe der Formbacke 10 an die Ritzelrückführungsstrecke 5, da das Ritzel 21 sofort nach Übergabe der Formbacke 10 an das erste Ritzel der Ritzelrückführungsstrecke 5 abgesenkt werden kann, um wieder nach Innen zur Formstrecke hin zu fahren.

Durch Betätigung des Kniehebelmechanismus 25 wird eine Schwenkbewegung des Rahmens 29 um eine Achse 27 erreicht. Dabei ist es vorteilhaft, dass die Drehachse des Motors 23 (vgl. Fig. 1) zum Drehen der Querförderritzel und/oder die Drehachse des Motors zum Querverschieben der Querförderritzel mit der Drehachse der Halterung bzw. des Rahmens zusammmenfallen. Durch diese Maßnahme wird der Antrieb bzw. die Kraftübertragung auf das Ritzel 21 nicht durch die Schwenkbewegung nachteilig beeinflusst.

Die Mittel zur Absenkung des Ritzels 21 sind nach der vorliegenden Erfindung nicht auf einen Kniehebelmechanismus 25 beschränkt. Vielmehr kann nach weiteren Ausführungsbeispielen auch ein Scherenhebelmechanismus oder ein Parallelogrammhebelmechanismus verwendet werden.

Bei der Einlaufbaugruppe 2 sind diese oben beschriebenen Vorteile ebenfalls gegeben. Wenn ein Paar von Formbacken 10 von der Einlaufbaugruppe 2 in Eingriff mit den Ritzeln 20 der Formstreckeneinrichtung gebracht wurden, können die Ritzel 26 der Einlaufbaugruppe 2 sofort abgesenkt werden, um außer Eingriff mit den Formbacken 10 zu kommen. Auf diese Weise können die Ritzel 26 der Einlaufbaugruppe 2 quer nach Außen verfahren werden, obwohl sich die Formbacken 10 wenigstens teilweise noch oberhalb der Ritzel 26 der Einlaufbaugruppe befinden.

Die Produktionsgeschwindigkeit kann nach dem ersten Ausführungsbeispiel 4 m/min betragen, wobei sich acht Formbackenpaare mit einer axialen Länge von jeweils 500 mm im Kreislauf befinden können. Die für die Rückführung einer Formbacke 10 zur Verfügung stehende Zeit beträgt damit 7,5 s, um eine lückenfreie Rückführung zu gewährleisten. Wenn nun die Steuerung für den Antrieb des Ritzels 26 eine Bewegung der Formbacke 10 in Produktionsrichtung von beispielsweise 100 mm abwarten müsste, so würde dies einen Zeitverlust von 1,5 s bedeuten, was im Verhältnis zum Gesamtzyklus von 7,5 s einen Zeitverlust von 20 % darstellt. Durch diesen Zeitgewinn, der bei jedem Ubergabevorgang der Einlauf und Auslaufbaugruppe gegeben ist, kann im Ergebnis die Produktionsgeschwindigkeit erhöht werden, da die Formbacken schneller und effizienter zurückgeführt werden können.

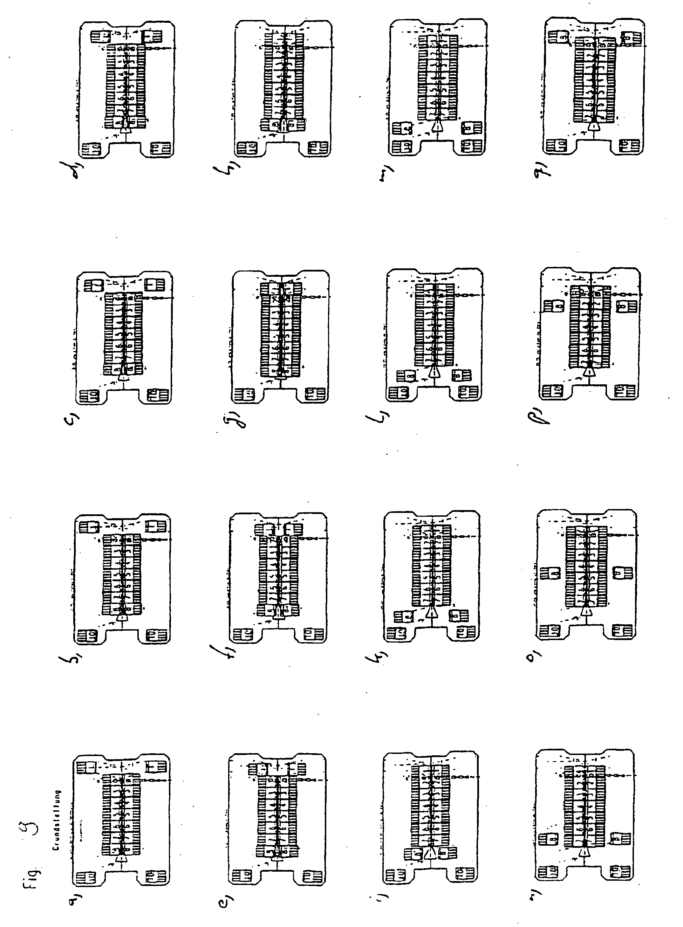

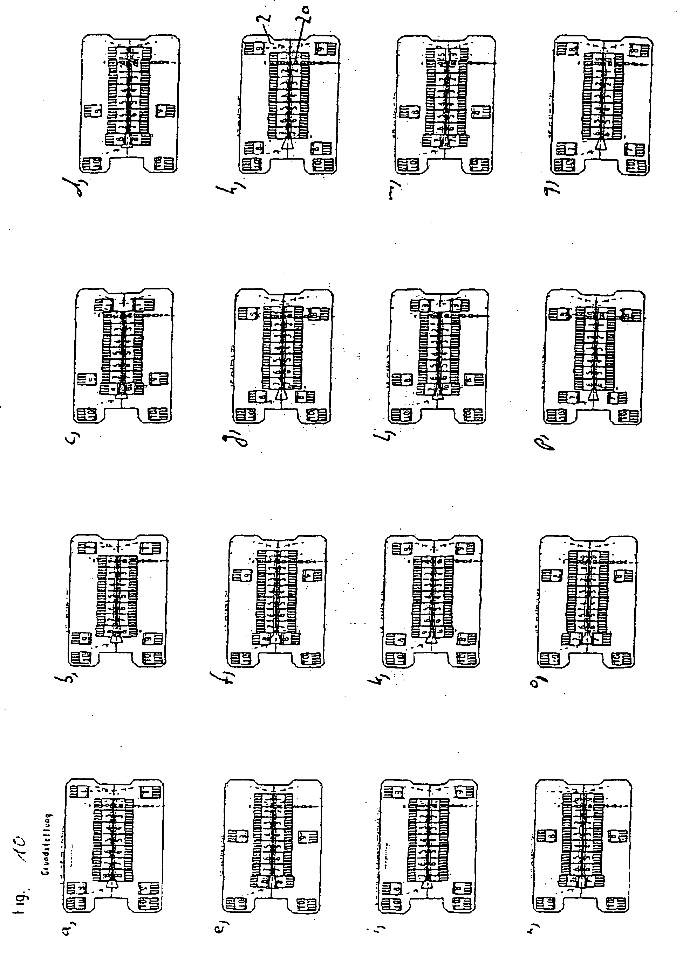

Ein weiterer Vorteil der vorliegenden Erfindung ist, dass sich mehr als ein Formbackenpaar auf der Rücklaufstrecke befinden kann. Dieser Vorteil ist in Fig. 10 im Vergleich zu Fig. 9 dargestellt Fig. 9 zeigt das Prinzip der Rückführung einer Formbacke, wie dies z.B. auch bei der Vorrichtung nach der EP-A-0 636 462 umgesetzt ist (Ablauf ist in Fig. 9 zeinlenweise zu betrachten). In Fig. 10 befinden sich - abgesehen von den Formbacken in der Parkstation - neun Formbackenpaare, wohingegen sich in Fig. 9 nur acht Formbackenpaare im Kreislauf befinden. Nach dem in Fig. 10 dargestellten Prinzip befinden sich jeweils zwei Formbackenpaare auf der Rücklaufstrecke (vgl. z.B. Fig. 10, Zeile 1, Spalte 1: Formbacken Nr. 9 und Nr. 1).

Der Vorteil der vorliegenden Erfindung zeigt sich insbesondere bei einem Vergleich der Position h) in Fig. 10 (Zeile 2, Spalte 4) mit der Position i) (Zeile 3, Spalte 1). In der Position h) befindet sich das Ritzel 26 der Einlaufbaugruppe 2 noch im Eingriff mit den Formbacken Nr. 1, um diese mit dem Antriebsritzel 20 der Formstreckeneinrichtung in Eingriff zu bringen. Am Ende der Position h) fahren die Ritzel 26 der Einlaufbaugruppe 2 nach unten, um wieder nach Außen zu fahren. Nach dem Stand der Technik wäre dies erst nach der Position k) in Fig.10 (Zeile 3, Spalte 2) möglich.

Erfindungsgemäß können sich die Formbacken Nr. 9 bereits in der äußeren Stellung am Anfang der Formstrecke befinden (vgl. Positionen h) und i)), da die Ritzel 26 der Einlaufbaugruppe 2 in der unteren Stellung nach Außen gefahren werden und anschließend von unten die Formbacken Nr. 9 ergreifen. Durch diese parallele Arbeitsweise können sich nach der vorliegenden Erfindung zwei oder mehr Formbackenpaare auf der Rücklaufstrecke befinden.

Nach weiteren Ausführungsbeispielen der vorliegenden Erfindung kann die statt einer Ritzelrückführungseinrichtung für die Rückführung entgegengesetzt zur Produktionsrichtung auch durch einen Kran bzw. einen Portalroboter erfolgen. Der Portalroboter kann dabei auch entweder die erfindungsgemäße Einlauf- oder der Auslaufbaugruppe ersetzen, wobei mindestens eine erfindungsgemäße Einlauf- oder der Auslaufbaugruppe vorhanden ist.

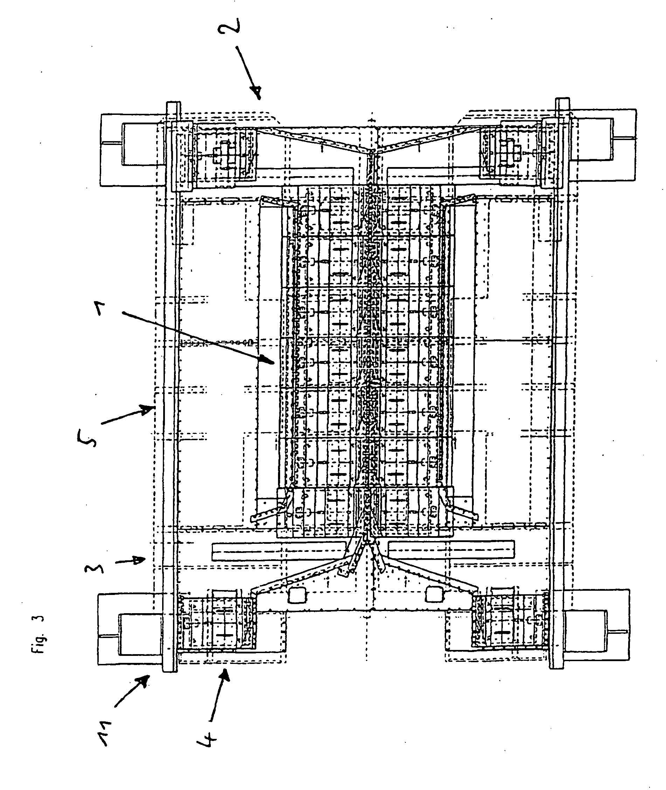

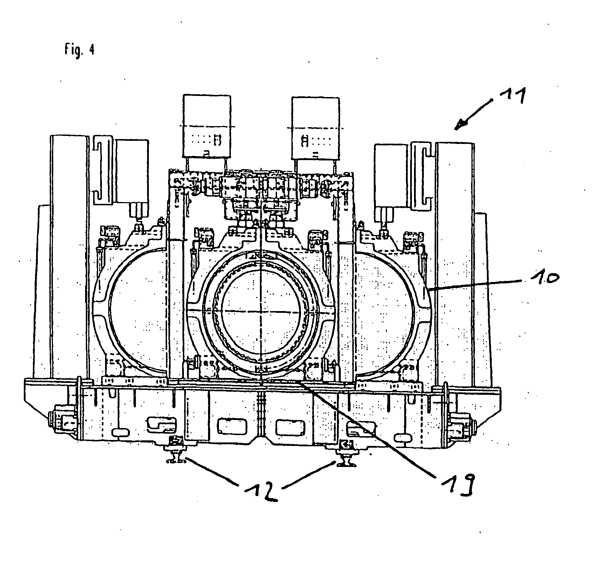

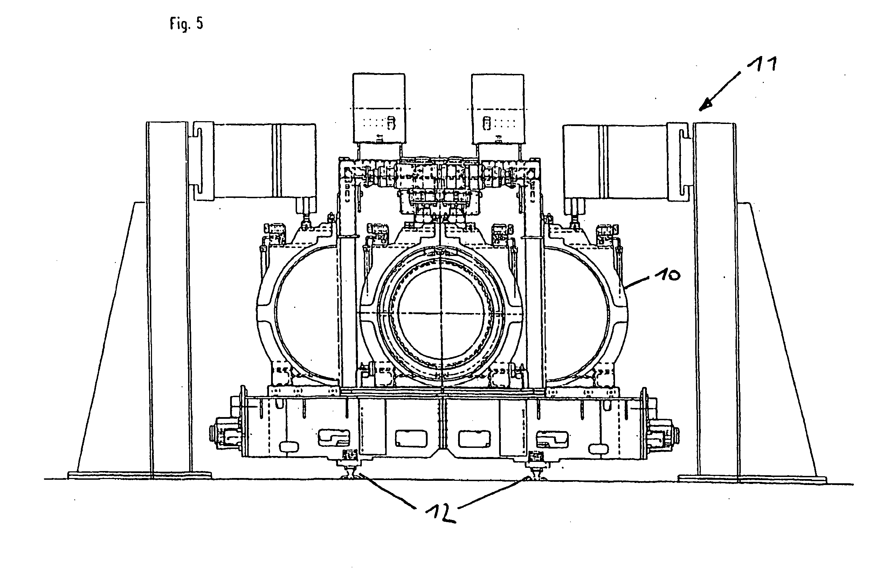

Nach weiteren Ausführungsbeispielen der vorliegenden Erfindung, können Längsportale 11 vorgesehen sein, die entweder gemeinsam mit der Formstreckeneinrichtung und der Rückführungseinrichtung auf Schienen 12 verfahrbar ist (vgl. Fig. 3 und 4). Die Längsportale können jedoch auch direkt auf dem Boden montiert sein (vgl. Fig. 5).

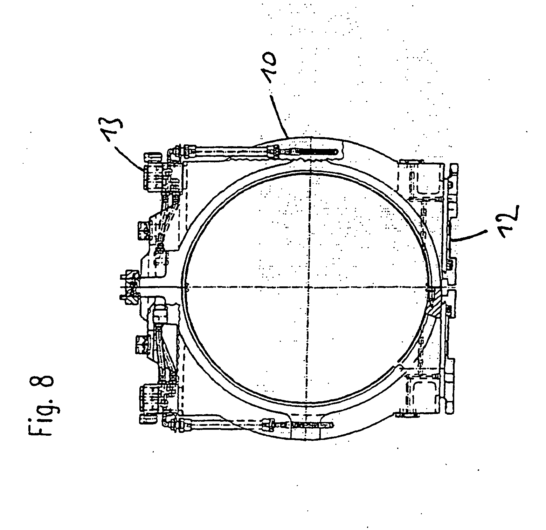

In Fig. 8 ist ein Paar von Formbacken 10 dargestellt, das für eine Vorrichtung zur Herstellung von Wellrohren verwendet werden kann. Eine Formbacke 10 weist nach einer Ausführungsform eine untere Zahnstange 12 auf zum Zusammenwirken mit den Ritzeln der formstreckeneinrichtung und mit den Ritzeln der Einlaufund Auslaufgruppe 2, 3 sowie der Ritzelrückfuhmrungsstrecke 5. Außerdem ist jeweils ein Anschluss 13 für den Kühlmittelkreislauf vorgesehen, damit bei der Herstellung eines Wellrohres die thermische Energie des eingespritzten thermoplastischen Kunststoffes abgeführt werden kann. Das Formbackenpaar kann zur Herstellung von Wellrohren mit einem Außendurchmesser von 1800 mm vorgesehen sein. Größere Außendurchmesser von z.B. 2400 mm sind jedoch ebenfalls möglich.

Sofern Wellrohre mit kleineren Außendurchmessern mit einer Vorrichtung zur Herstellung von Wellrohren hergestellt werden sollen, die eigentlich für größere Außendurchmesser konstruiert ist, dann ist es nach dem Stand der Technik z.B. aus der DE 101 48 294 C1 bereits bekannt, Formbacken 10 mit inneren Profileinsätzen 15 zu verwenden.

## Patentansprüche

1. Vorrichtung zur Herstellung von Wellrohren aus thermoplastischem Kunststoff,
bei der in einem Kreislauf sich paarweise ergänzende Formbacken (10) gemeinsam entlang einer sich an einen Spritzkopf anschließenden Formstrecke (1) geführt, am Ende der Formstrecke (1) auseinandergefahren und separat voneinander zu deren Anfang zurückgeführt werden,
mit einer Formstreckeneinrichtung zur Bewegung der Formbacken entlang der Formstrecke (1), die einen Maschinentisch (19) mit Antriebsmitteln (20) für die Formbacken (10) auf der Formstrecke (1) aufweist, und
mit einer Rückfördereinrichtung zur Rückförderung der Formbacken (10) vom Ende der Formstrecke (1) zu deren Anfang, die eine Auslaufbaugruppe (2) zum Auseinanderfahren der Formbacken (10) am Ende der Formstrecke (1) und/oder eine Einlaufbaugruppe (3) zum Hineinfahren der Formbacken (10) am Anfang der Formstrecke (1) aufweist, und
die Auslaufbaugruppe (3) und/oder die Einlaufbaugruppe (3) Antriebsmittel (20) aufweist, die senkrecht in Bezug auf die Ebene des Maschinentisches (19) verfahrbar sind, wobei die Antriebsmittel (20) der Auslauf und/oder Einlaufbaugruppe (3; 2) die Formbacken (10) von unten antreiben,
**dadurch gekennzeichnet, dass**
die Antriebsmittel der Einlauf- bzw. Auslaufgruppe (3; 2) durch eine Halterung bzw. einen Rahmen (29) gestützt werden, die bzw. der mindestens einen Hebelmechanismus (25) aufweist, und
im Bereich des Hebelmechanismus (25) ein linearer Betätigungsmechanismus angreift, um eine Verschwenkung der Halterung bzw. des Rahmens (29) zu bewirken.

2. Vorrichtung gemäß Anspruch 1, **dadurch gekennzeichnet, dass** die Antriebsmittel der Auslauf- und/oder Einlaufbaugruppe (3; 2) sofort abgesenkt werden, wenn eine betreffende Formbacke in Eingriff mit dem Antriebsmittel der Formstreckeneinrichtung gebracht wurde.

3. Vorrichtung gemäß Anspruch 1 oder 2, **dadurch gekennzeichnet, dass** die Antriebsmittel der Auslauf- und/oder Einlaufbaugruppe (3; 2) derart senkrecht in Bezug auf die Ebene des Maschinentisches (19) verfahrbar sind, dass die Antriebsmittel jeweils außer Eingriff mit einer Formbacke (10), die sich in senkrechter Richtung befindet, gebracht werden.

4. Vorrichtung gemäß einem der vorhergehenden Ansprüche, **dadurch gekennzeichnet, dass** die Antriebsmittel der Auslauf- und/oder Einlaufbaugruppe (3; 2) derart senkrecht in Bezug auf die Ebene des Maschinentisches (19) verfahrbar sind, dass sich der Schwerpunkt der Antriebsmittel senkrecht in Bezug auf die Ebene des Maschinentisches (19) versetzt.

5. Vorrichtung gemäß einem der vorhergehenden Ansprüche, **dadurch gekennzeichnet, dass** die Antriebsmittel der Auslauf- und/oder Einlaufbaugruppe (3; 2) die im Eingriff stehenden Formbacken (10) nur parallel zur Ebene des Maschinentisches (19) antreiben.

6. Vorrichtung gemäß einem der vorhergehenden Ansprüche, **dadurch gekennzeichnet, dass** die Antriebsmittel der Auslauf- und/oder Einlaufbaugruppe (3; 2) bei der Bewegung senkrecht in Bezug auf die Ebene des Maschinentisches (19) auch eine Bewegungskomponente in einer Richtung parallel zu der Ebene des Maschinentisches (19) aufweisen.

7. Vorrichtung gemäß einem der vorhergehenden Ansprüche, **dadurch gekennzeichnet, dass** die Antriebsmittel der Auslauf- und/oder Einlaufbaugruppe (3; 2) bei der Bewegung senkrecht in Bezug auf die Ebene des Maschinentisches (19) um eine Achse (27) verschwenkt werden.

8. Vorrichtung gemäß einem der vorhergehenden Ansprüche, **dadurch gekennzeichnet, dass** die Antriebsmittel der Auslauf- und/oder Einlaufbaugruppe (3; 2) ein oder mehrere Querförderritzel (21; 26) umfassen, die jeweils insbesondere auf einer angetriebenen Vielkeilwelle (22) gelagert sind.

9. Vorrichtung gemäß Anspruch 8, **dadurch gekennzeichnet, dass** das bzw. die Querförderritzel (21; 26) der Auslauf- und/oder Einlaufbaugruppe (3; 2) querbeweglich antreibbar sind.

10. Vorrichtung gemäß Anspruch 8 oder 9, **dadurch gekennzeichnet, dass** jedes Querförderritzel (21; 26) in einem querverfahrbaren Schlitten (24) gelagert ist, der durch eine angetriebene Spindel verfahrbar ist.

11. Vorrichtung gemäß einem der vorhergehenden Ansprüche, **dadurch gekennzeichnet, dass** die Formbacken (10) Zahnstangen (12) aufweisen, die mit den Antriebsmitteln der Auslauf- und/oder Einlaufbaugruppe (3; 2) bzw. mit den Antriebsmitteln der Formstreckeneinrichtung zusammenwirken.

12. Vorrichtung gemäß einem der vorhergehenden Ansprüche, **dadurch gekennzeichnet, dass** der Hebelmechanismus ein Kniehebelmechanismus (25) ist.

13. Vorrichtung gemäß Anspruch 12, **dadurch gekennzeichnet, dass** der Betätigungsmechanismus ein Pneumatikzylinder (28), ein Hydraulikzylinder oder ein Spindelantrieb ist.

14. Vorrichtung gemäß Anspruch 12 oder 13, **dadurch gekennzeichnet, dass** die Drehachse des Motors zum Drehen der Querförderritzel (21; 26) und/oder die Drehachse des Motors zum Querverschieben der Querförderritzel (21; 26) mit der Drehachse der Halterung bzw. des Rahmens (29) zusammmenfallen.

15. Vorrichtung gemäß einem der Ansprüche 1 bis 11, **dadurch gekennzeichnet, dass** die Antriebsmittel der Einlauf- bzw. Auslaufgruppe (2; 3) durch eine Halterung bzw. einen Rahmen (29) gestützt werden, die bzw. der über einen Scherenhebelmechanismus oder einen Parallelogrammhebelmechanismus senkrecht in Bezug auf die Ebene des Maschinentisches (19) verstellt werden kann.

16. Vorrichtung gemäß einem der vorhergehenden Ansprüche, **dadurch gekennzeichnet, dass** die Rückführung der Formbacken (10) entgegen der Produktionsrichtung auf beiden Seiten der Formstrecke (1) jeweils durch Rücklaufstrecken (5) mit zusammenwirkenden Antriebsritzeln (18) erfolgt.

17. Vorrichtung gemäß einem der Ansprüche 1 bis 15, **dadurch gekennzeichnet, dass** die Rückführung der Formbacken (10) entgegen der Produktionsrichtung durch mindestens einen Portalroboter bzw. Kran erfolgt.

18. Vorrichtung gemäß Anspruch 17, **dadurch gekennzeichnet, dass** der Portalroboter bzw. Kran die Formbacken (10) am Ende der Formstrecke herausführt, anschließend entgegen der Produktionsrichtung zurückführt, und dass der Portalroboter bzw. Kran die Formbacken (10) am Anfang der Formstrecke (1) an eine Einlaufbaugruppe (2) übergibt, welche die Formbacken (10) in die Formstrecke (1) hineinführt.

19. Vorrichtung gemäß Anspruch 17, **dadurch gekennzeichnet, dass** zum Herausführen der Formbacken (10) eine Auslaufbaugruppe (3) vorgesehen ist, und dass der Portalroboter bzw. Kran die Formbacken (10) entgegen der Produktionsrichtung zurückführt und anschließend in die Formstrecke (1) hineinführt.

20. Vorrichtung gemäß einem der vorhergehenden Ansprüche, **dadurch gekennzeichnet, dass** die Formstreckeneinrichtung untere und obere Antriebsmittel für die Formbacken (10) auf der Formstrecke (1) aufweist.

## Claims

1. Device for the production of corrugated pipes from thermoplastic,
in which mould jaws (10), which complement each other in pairs, are guided jointly in a circuit along a mould section (1) adjoining an extruder head, the mould jaws being moved apart at the end of the mould section (1) and returned to its beginning separately from one another,
with a mould section device for the movement of the mould jaws along the mould section (1), which has a supporting table (19) with drive means (20) for the mould jaws (10) on the mould section (1), and
with a return conveying device for the return conveyance of the mould jaws (10) from the end of the mould section (1) to its beginning, which has an outlet assembly (2) to move the mould jaws (10) apart at the end of the mould section (1) and/or an inlet assembly (3) to move in the mould jaws (10) at the beginning of the mould section (1), and
the outlet assembly (3) and/or the inlet assembly (3) has drive means (20), which can be moved perpendicularly with reference to the plane of the supporting table (19), the drive means (20) of the outlet and/or inlet assembly (3; 2) driving the mould jaws (10) from below,
**characterised in that**
the drive means of the inlet or outlet group (3; 2) are supported by a holder or a frame (29), which has at least one lever mechanism (25), and
in the area of the lever mechanism (25), a linear actuation mechanism acts, so as to bring about a swivelling of the holder or the frame (29).

2. Device according to Claim 1, **characterised in that** the drive means of the outlet and/or inlet assembly (3; 2) are immediately lowered when a mould jaw concerned has been brought into engagement with the drive means of the mould section device.

3. Device according to Claim 1 or 2, **characterised in that** the drive means of the outlet and/or inlet assembly (3; 2) can be moved perpendicularly with reference to the plane of the supporting table (19) in such a way that the drive means are in each case disengaged from a mould jaw (10) situated in a perpendicular direction.

4. Device according to one of the preceding claims, **characterised in that** the drive means of the outlet and/or inlet assembly (3; 2) can be moved perpendicularly with reference to the plane of the supporting table (19) in such a way that the centre of gravity of the drive means is displaced perpendicularly with reference to the plane of the supporting table (19).

5. Device according to one of the preceding claims, **characterised in that** the drive means of the outlet and/or inlet assembly (3; 2) drive the engaged mould jaws (10) only parallel to the plane of the supporting table (19).

6. Device according to one of the preceding claims, **characterised in that** the drive means of the outlet and/or inlet assembly (3; 2) also have a movement component in a direction parallel to the plane of the supporting table (19) when being moved perpendicularly with reference to the plane of the supporting table (19).

7. Device according to one of the preceding claims, **characterised in that** the drive means of the outlet and/or inlet assembly (3; 2) are swivelled around an axis (27) when being moved perpendicularly with reference to the plane of the supporting table (19).

8. Device according to one of the preceding claims, **characterised in that** the drive means of the outlet and/or inlet assembly (3; 2) comprise one or more transverse conveying pinions (21; 26), which are in each case mounted, in particular, on a driven spline shaft (22).

9. Device according to Claim 8, **characterised in that** the transverse conveying pinion(s) (21; 26) of the outlet and/or inlet assembly (3; 2) can be driven in a transverse movement.

10. Device according to Claim 8 or 9, **characterised in that** each transverse conveying pinion (21; 26) is mounted in a carriage (24) that can be moved transversely and can be moved by a driven spindle.

11. Device according to one of the preceding claims, **characterised in that** the mould jaws (10) have toothed racks (12) that interact with the drive means of the outlet and/or inlet assembly (3; 2) or with the drive means of the mould section device.

12. Device according to one of the preceding claims, **characterised in that** the lever mechanism is a knee lever mechanism (25).

13. Device according to Claim 12, **characterised in that** the actuation mechanism is a pneumatic cylinder (28), a hydraulic cylinder or a spindle drive.

14. Device according to Claim 12 or 13, **characterised in that** the rotation axis of the motor for the rotation of the transverse conveying pinions (21; 26) and/or the rotation axis of the motor for the transverse displacement of the transverse conveying pinions (21; 26) coincide with the rotation axis of the holder or the frame (29).

15. Device according to one of Claims 1 to 11, **characterised in that** the drive means of the inlet or outlet group (2; 3) are supported by a holder or a frame (29), which can be adjusted via a scissors-type lever mechanism or a parallelogram lever mechanism perpendicularly with reference to the plane of the supporting table (19).

16. Device according to one of the preceding claims, **characterised in that** the return of the mould jaws (10) takes place in each case by return sections (5) with interacting drive pinions (18) contrary to the production direction on both sides of the mould section (1).

17. Device according to one of Claims 1 to 15, **characterised in that** the return of the mould jaws (10) is carried out by at least one portal robot or crane contrary to the production direction.

18. Device according to Claim 17, **characterised in that** the portal robot or crane leads the mould jaws (10) out at the end of the mould section, and subsequently returns them contrary to the production direction, and **in that** the portal robot or crane transfers the mould jaws (10) to an inlet assembly (2) at the beginning of the mould section (1), and the inlet assembly leads the mould jaws (10) into the mould section (1).

19. Device according to Claim 17, **characterised in that** an outlet assembly (3) is provided to lead the mould jaws (10) out, and **in that** the portal robot or crane returns the mould jaws (10) contrary to the production direction and subsequently leads them into the mould section (1).

20. Device according to one of the preceding claims, **characterised in that** the mould section device has lower and upper drive means for the mould jaws (10) on the mould section (1).

## Revendications

1. Dispositif de fabrication de tubes ondulés en matière thermoplastique, dans lequel, durant un cycle, des mâchoires de moulage complémentaires par paires (10) sont guidées ensemble le long d'un trajet de moulage (1) raccordé à une tête d'injection, sont écartées l'une de l'autre à la fin du trajet de moulage (1) et sont ramenées séparément l'une de l'autre au début de celui-ci, avec un dispositif de trajet de moulage pour déplacer les mâchoires de moulage le long du trajet de moulage (1), le dispositif de trajet de moulage comportant une table de machine (19) avec des moyens d'entraînement (20) pour les mâchoires de moulage (10) sur le trajet de moulage (1), et avec un dispositif de retour pour ramener les mâchoires de moulage (10) de la fin du trajet de moulage (1) au début de celui-ci, le dispositif de retour comportant un ensemble de sortie (2) pour écarter les mâchoires de moulage (10) l'une de l'autre à la fin du trajet de moulage (1) et/ou un ensemble d'entrée (3) pour engager les mâchoires de moulage (10) au début du trajet de moulage (1), et l'ensemble de sortie (3) et/ou l'ensemble d'entrée (3) comportant des moyens d'entraînement (20) qui sont déplaçables perpendiculairement au plan de la table de machine (19), les moyens d'entraînement (20) de l'ensemble de sortie et/ou de l'ensemble d'entrée (3 ; 2) entraînant les mâchoires de moulage (10) par-dessous, **caractérisé en ce que** les moyens d'entraînement de l'ensemble d'entrée, respectivement de sortie (3 ; 2) sont soutenus par un support, respectivement par un cadre (29) qui comporte au moins un mécanisme à levier (25), et un mécanisme d'actionnement linéaire agit dans la zone du mécanisme à levier (25) pour basculer le support, respectivement le cadre (29).

2. Dispositif selon la revendication 1, **caractérisé en ce que** les moyens d'entraînement des ensembles de sortie et/ou d'entrée (3 ; 2) sont abaissés aussitôt qu'une mâchoire de moulage correspondante est amenée en prise avec le moyen d'entraînement du dispositif de trajet de moulage.

3. Dispositif selon la revendication 1 ou 2, **caractérisé en ce que** les moyens d'entraînement des ensembles de sortie et/ou d'entrée (3 ; 2) sont déplaçables perpendiculairement au plan de la table de machine (19), de façon à dégager chacun des moyens d'entraînement d'une mâchoire de moulage (10) située dans la direction perpendiculaire.

4. Dispositif selon une des revendications précédentes, **caractérisé en ce que** les moyens d'entraînement des ensembles de sortie et/ou d'entrée (3 ; 2) sont déplaçables perpendiculairement au plan de la table de machine (19), de façon à déplacer le centre de gravité des moyens d'entraînement perpendiculairement au plan de la table de machine (19).

5. Dispositif selon une des revendications précédentes, **caractérisé en ce que** les moyens d'entraînement des ensembles de sortie et/ou d'entrée (3 ; 2) n'entraînent les mâchoires de moulage en prise (10) que parallèlement au plan de la table de machine (19).

6. Dispositif selon une des revendications précédentes, **caractérisé en ce que**, lors de leur déplacement perpendiculairement au plan de la table de machine (19), les moyens d'entraînement des ensembles de sortie et/ou d'entrée (3 ; 2) possèdent également une composante de déplacement dans une direction parallèle au plan de la table de machine (19).

7. Dispositif selon une des revendications précédentes, **caractérisé en ce que**, lors de leur déplacement perpendiculairement au plan de la table de machine (19), les moyens d'entraînement des ensembles de sortie et/ou d'entrée (3 ; 2) pivotent autour d'un axe (27).

8. Dispositif selon une des revendications précédentes, **caractérisé en ce que** les moyens d'entraînement des ensembles de sortie et/ou d'entrée (3 ; 2) comprennent un ou plusieurs pignons de convoyage transversal (21 ; 26) qui sont montés chacun en particulier sur un arbre cannelé mené (22).

9. Dispositif selon la revendication 8, **caractérisé en ce que** le, respectivement les pignons de convoyage transversal (21, 26) des ensembles de sortie et/ou d'entrée (3 ; 2) peuvent être entraînés en translation transversale.

10. Dispositif selon la revendication 8, **caractérisé en ce que** le, respectivement les pignons de convoyage transversal (21 ; 26) sont montés dans un chariot à déplacement latéral (24) qui est déplaçable à l'aide d'une broche menée.

11. Dispositif selon une des revendications précédentes, **caractérisé en ce que** les mâchoires de moulage (10) comportent des crémaillères (12) qui coopèrent avec les moyens d'entraînement des ensembles de sortie et/ou d'entrée (3 ; 2), respectivement avec les moyens d'entraînement du dispositif de trajet de moulage.

12. Dispositif selon une des revendications précédentes, **caractérisé en ce que** le mécanisme à levier est un mécanisme de levier à genouillère (25).

13. Dispositif selon la revendication 12, **caractérisé en ce que** le mécanisme d'actionnement est un vérin pneumatique (28), un vérin hydraulique ou un moyen d'entraînement à broche.

14. Dispositif selon la revendication 12 ou 13, **caractérisé en ce que** l'axe de rotation du moteur de mise en rotation des pignons de convoyage transversal (21 ; 26) et/ou l'axe de rotation du moteur de déplacement transversal des pignons de convoyage transversal (21 ; 26) coïncident avec l'axe de rotation du support, respectivement du cadre (29).

15. Dispositif selon une des revendications 1 à 11, **caractérisé en ce que** les moyens d'entraînement des ensembles d'entrée, respectivement de sortie (2 ; 3) sont soutenus par un support, respectivement par un cadre (29), lesquels peuvent être déplacés perpendiculairement au plan de la table de machine (19) par l'intermédiaire d'un mécanisme à leviers croisés ou d'un mécanisme à leviers en parallélogramme.

16. Dispositif selon une des revendications précédentes, **caractérisé en ce que** le retour des mâchoires de moulage (10) à l'encontre de la direction de production s'effectue des deux côtés du trajet de moulage (1), à chaque fois par l'intermédiaire de trajets de retour (5) munis de pignons d'entraînement conjugués (18).

17. Dispositif selon une des revendications 1 à 15, **caractérisé en ce que** le retour des mâchoires de moulage (10) à l'encontre de la direction de production s'effectue par l'intermédiaire d'au moins un robot portique, respectivement d'une grue.

18. Dispositif selon la revendication 17, **caractérisé en ce que** le robot portique, respectivement la grue évacue les mâchoires de moulage (10) à la fin du trajet de moulage, les ramène ensuit à l'encontre de la direction de production, et **en ce que**, au début du trajet de moulage (1), le robot portique, respectivement la grue transmet les mâchoires de moulage (10) à un ensemble d'entrée (2), lequel introduit les mâchoires de moulage (10) dans le trajet de moulage (1).

19. Dispositif selon la revendication 17, **caractérisé en ce qu'**un ensemble de sortie (3) est prévu pour évacuer les mâchoires de moulage (10), et **en ce que** le robot portique, respectivement la grue ramène les mâchoires de moulage (10) à l'encontre de la direction de production et les introduit ensuite dans le trajet de moulage (1).

20. Dispositif selon une des revendications précédentes, **caractérisé en ce que** le dispositif de trajet de moulage comporte des moyens d'entraînement inférieur et supérieur pour les mâchoires de moulage (10) sur le trajet de moulage (1).
